# EUROPÄISCHE PATENTSCHRIFT

(11) **EP 2 118 588 B1**
(45) Veröffentlichungstag und Bekanntmachung des Hinweises auf die Patenterteilung: **01.08.2012**
(21) Anmeldenummer: 08701468.4
(22) Anmeldetag: 15.01.2008
(51) Int. Cl.: F25B 35/04, F25B 17/08

(54) **KOMPAKTE SORPTIONSKÄLTEEINRICHTUNG**
COMPACT SORPTION COOLING UNIT
INSTALLATION FRIGORIFIQUE PAR SORPTION COMPACTE

(30) Priorität: 13.03.2007 DE 102007012113
(43) Veröffentlichungstag der Anmeldung: 18.11.2009
(73) Patentinhaber: SorTech AG, 06120 Halle (DE)
(72) Erfinder: BÜTTNER, Thomas, 04275 Leipzig (DE); MITTELBACH, Walter, 06108 Halle (DE)
(74) Vertreter: Meissner, Bolte & Partner
(86) Internationale Anmeldenummer: PCT/EP2008/050355
(87) Internationale Veröffentlichungsnummer: WO 2008/110395

(56) Entgegenhaltungen:
- EP-A- 1 148 305
- WO-A-01/22010
- WO-A-92/08934
- WO-A-2005/108880
- DE-A1- 3 808 653
- US-A- 4 199 959
- US-A1- 2003 005 721

## Beschreibung

Die Erfindung betrifft eine kompakte Sorptionskälteeinrichtung, umfassend mindestens eine Adsorber-Desorber-Einheit mit Wärmetauscher und Sorptionsmaterial, mindestens einen Kondensator-Wärmetauscher und mindestens einen Verdampfer-Wärmetauscher, wobei diese Baueinheiten in einem gemeinsamen, vakuumdichten metallischen Außengehäuse befindlich sind, sowie mit Anschluss- und Verbindungsmitteln und Rohrdurchführungen zum hydraulischen Verschalten und Betrieb und einer Sandwichstruktur gemäß Oberbegriff des Patentanspruchs 1.

Sorptionswärmepumpen, bei denen Ad-/Desorber-Wärmetauscher zusammen mit einem Verdampfer und einem Kondensator in einem gemeinsamen vakuumdichten Behälter angeordnet sind, stellen gemäß der DE 199 02 695 A1 einen bekannten Stand der Technik dar.

Aus der gattungsbildenden DE 102 17 443 B4 ist darüber hinaus eine Feststoff-Sorptionswärmepumpe, umfassend eine Adsorber-Desorber-Einheit mit einem Wärmetauscher und einem Feststoff-Sorptionsmaterial vorbekannt, wobei diese Adsorber-Desorber-Einheit in einem gemeinsamen, zur Umgebung abgedichteten Gehäuse zusammen mit einer Kondensator-Verdampfer-Einheit angeordnet ist. Die Adsorber-Desorber-Einheit und die Kondensator-Verdampfer-Einheit sind bei diesem Stand der Technik durch ein adsorptivdurchlässiges Element voneinander getrennt.

Um gemäß DE 102 17 443 B4 einen Aufbau mit einer geringen Wärmekapazität zu erreichen, umfasst die dortige Adsorber-Desorber-Einheit einen wärmeleitenden Aufnahmekörper, der in wärmeleitender Verbindung mit dem Wärmetauscher steht. Der Aufnahmekörper erfüllt demnach zwei Funktionen, nämlich einerseits die Wärmeübertragung zwischen Wärmetauscher und Sorptionsmaterial und andererseits die Herstellung einer stabilen Struktur der Adsorber-Desorber-Einheit. Mit einer solchen stabilen Struktur ist es möglich, die Wandung des gemeinsamen Gehäuses besonders dünn auszuführen, da diese der Baueinheit der Sorptionswärmepumpe keine zusätzliche Stabilität mehr verleihen muss, sondern lediglich zur Abdichtung des Innenraums gegenüber der Umgebung dient.

Gemäß Ausführungsbeispiel des Standes der Technik nach DE 102 17 443 B4 kann die Außenwandung als Blechummantelung ausgeführt werden, die von außen auf die Adsorber-Desorber-Einheit bzw. Kondensator-Verdampfer-Einheit aufgelegt oder abgestützt ist. Zum Erreichen einer guten Isolierung gegenüber der Umgebung kann das gemeinsame Gehäuse auch zweischalig ausgeführt werden, wobei in den Innenraum zwischen innerer und äußerer Schale ein wärmedämmendes Material eingefügt wird. Das dem bekannten Stand der Technik entnehmbare gemeinsame Gehäuse kann, wie bereits erwähnt, aus einem dünnen Blechmaterial bestehen, welches die einzelnen Elemente umhüllt. Die mechanische Stabilität des Bleches wird durch Unterstützung der Ränder des Wärmetauschers im Bereich von Rohrumlenkungen gesichert. Die Adsorber-Desorber-Einheit und die Kondensator-Verdampfer-Einheit sind übereinander angeordnet und durch das dampfdurchlässige Element, z.B. in Form eines Keramikschwamms realisiert, voneinander getrennt. Am Gehäuse ist ein Evakuierungsstutzen befindlich. Hierdurch kann im Inneren des Gehäuses ein Unterdruck erzeugt werden. Durch den Unterdruck kommt die dünnwandige Blechummantelung des Gehäuses in Kontakt mit einem vorgesehenen Aufnahmekörper mit der Folge, dass die bei Unterdruck erzeugten Kräfte zu einer Stabilisierung der gesamten Anordnung führen.

Hinsichtlich der Wirkungsweise einer Sorptionswärmepumpe und deren Betrieb in den einzelnen Phasen sei auf die DE 102 17 443 B4 ausdrücklich Bezug genommen und hingewiesen.

Aus dem Vorgenannten ist es Aufgabe der Erfindung, eine weiterentwickelte kompakte Sorptionskälteeinrichtung, umfassend mindestens eine Adsorber-Desorber-Einheit mit Wärmetauscher und Sorptionsmaterial sowie Kondensator-Wärmetauscher und Verdampfer-Wärmetauscher anzugeben, welche über eine sehr hohe Leistungsfähigkeit einschließlich einem hohen Wirkungsgrad verfügt und die darüber hinaus unter Inanspruchnahme eines geringen Bauraums realisiert werden kann, wobei der Betrieb der zu schaffenden Einrichtung möglichst störungsfrei über einen langen Einsatzzeitraum gewährleistet ist.

Die Lösung der Aufgabe der Erfindung erfolgt durch eine kompakte Sorptionskälteeinrichtung gemäß der Merkmalskombination des Patentanspruchs 1, wobei die Unteransprüche mindestens zweckmäßige Ausgestaltungen und Weiterbildungen darstellen.

Es wird demnach von einer kompakten Sorptionskälteeinrichtung, umfassend mindestens eine Adsorber-Desorber-Einheit mit Wärmetauscher und Sorptionsmaterial, mindestens einen Kondensator-Wärmetauscher und mindestens einen Verdampfer-Wärmetauscher ausgegangen, wobei diese Baueinheiten in einem gemeinsamen, vakuumdichten, bevorzugt metallischen Außengehäuse befindlich sind. Weiterhin sind am oder im Gehäuse Anschluss- und Verbindungselemente sowie Rohrdurchführungen zum hydraulischen Verschalten und zum Betrieb der Einrichtung vorgesehen.

Erfindungsgemäß ist die Sorptionskälteeinrichtung als Sandwichstruktur ausgebildet, wobei die mindestens eine Adsorber-Desorber-Einheit sich in einem Innengehäuse oder Innenteilgehäuse befindet.

Der Kondensator-Wärmetauscher und der Verdampfer-Wärmetauscher sind beabstandet voneinander angeordnet und nehmen in ihrem Zwischenraum das Innengehäuse mit der Adsorber-Desorber-Einheit auf.

Die zum Kondensator-Wärmetauscher und zum Verdampfer-Wärmetauscher gerichteten Trennflächen des Innengehäuses umfassen Dampfventile.

Im Bereich zwischen dem Innengehäuse und dem Verdampfer-Wärmetauscher ist eine Wärmedämmschicht oder eine Wärmedämmplatte angeordnet, welche im Bereich des Dampfdurchtritts, d.h. im Bereich der Dampfventile, Ausnehmungen aufweist.

Die Trennflächen des Innengehäuses weisen Aussparungen auf, wobei in den Aussparungen Flatterventile eingesetzt sind. Diese Flatterventile dienen dem gesteuerten Dampfdurchlass. Die jeweiligen Flatterventile gelangen im Öffnungszustand in Anschlag mit einem Aussparungsabdeckstreifen, welcher höhenmäßig von der jeweiligen Trennfläche und der dort vorgesehenen Aussparung beabstandet ist. In einer bevorzugten Ausführungsform sind zwischen den jeweiligen Wärmetauschern und den Innengehäuseteilen Profilmaterial-Abstandshalter vorgesehen. Derartige Profilmaterial-Abstandshalter lassen sich durch Stanz- und Biegeschritte aus metallischem Material leicht fertigen oder können als Normprofile in handelsüblicher Art und Weise bezogen werden.

Über die Abmessungen der Profilmaterial-Abstandshalter sind darüber hinaus die Positionen der Wärmetauscher und deren Abstandslage festlegbar.

In einer Ausführungsform der Erfindung kann die Adsorber-Desorber-Einheit mindestens zwei benachbarte Wärmetauscher mit Sorptionsmaterial aufweisen, die sich in jeweils einer Kammer, d.h. getrennt voneinander, im Innengehäuse befinden.

Die Flatterventile sind durch elastisches Ventilmaterial und schwerkraftbedingt bei nicht vorhandener Druckdifferenz geschlossen. Das Ventilmaterial ändert seine Position bezüglich der Aussparungen dann, wenn eine Druckdifferenz zwischen Ober- und Unterseite der Ventilanordnung vorliegt.

Die Aussparungsabdeckstreifen können von ihrer Flächenabmessungsseite her größer oder gleich der Abmessung der jeweiligen Aussparung ausgebildet werden, so dass ein Schutz des Flatterventilmaterials erreicht wird.

Die jeweiligen Aussparungen können rechteckförmig oder quadratisch ausgebildet sein und einen Längs- oder Quersteg aufweisen, welcher die Aussparung teilt. Das Flatterventil ist dann am jeweiligen Quersteg fixierbar.

Das Innengehäuse ist teilgeschlossen ausgeführt, wobei dessen vollständige Kapselung durch entsprechende Abschnitte des Außengehäuses erreicht wird.

Bei einer weiteren Ausführungsform der Erfindung ist zwischen dem Kondensator-Wärmetauscher und dem Verdampfer-Wärmetauscher eine siphonartige Kondensatrückführung vorgesehen.

Diese Siphon-Kondensatrückführung umfasst ein Mantelrohr, dessen eines Ende in einen Druckausgleichstopf übergeht. Im Mantelrohr ist ein offenes Innenrohr befindlich. Das freie Ende des Innenrohrs steht über einen Flansch mit dem Kondensatablaufstutzen des Kondensator-Wärmetauschers in Verbindung. Weitere rohrförmige Verbindungen sind zwischen dem Druckausgleichstopf und dem Verdampfer-Wärmetauscher vorgesehen. Die Siphon-Kondensatrückführung ist außerhalb der Sorptionskälteeinrichtung befindlich und über vakuumdichte Anschlussmittel mit den im Inneren der Sorptionskälteeinrichtung angeordneten jeweiligen Wärmetauschern verbunden.

Die Erfindung soll nachstehend anhand eines Ausführungsbeispiels sowie unter Zuhilfenahme von Figuren näher erläutert werden.

Hierbei zeigen:

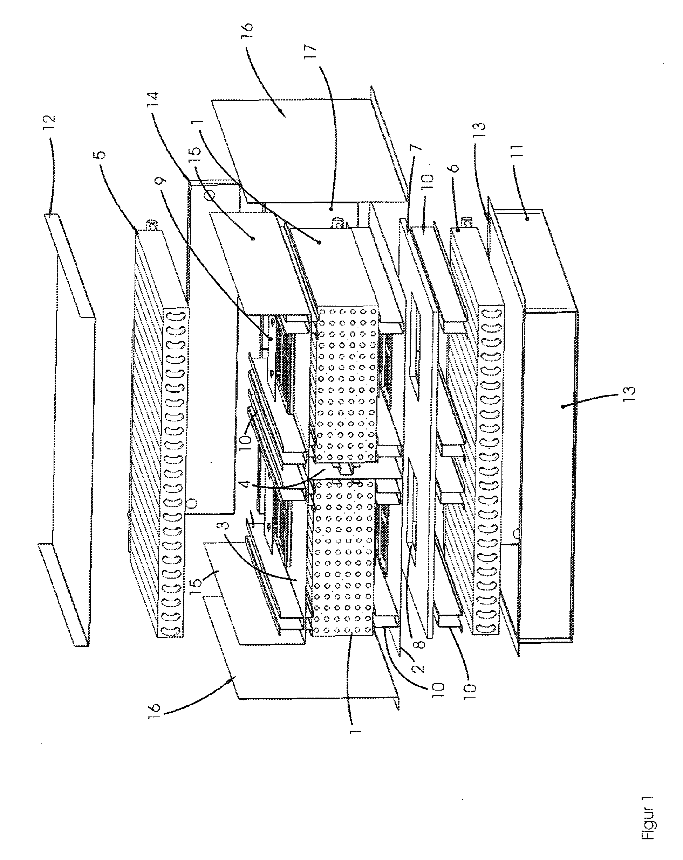

- Fig. 1: eine Explosivansicht der erfindungsgemäßen kompakten Sorptionskälteeinrichtung mit Teilelementen des Außengehäuses;
- Fig. 2: eine Darstellung der Blecheinhausung für die Sorptionskälteeinrichtung mit Elementen des Innengehäuses, allerdings ohne die in der Fig. 1 dargestellten Wärmetauscher und
- Fig. 3: eine bezogen auf die Blecheinhausung teilweggeschnitte Darstellung der Sorptionskälteeinrichtung mit Siphon-Kondensatrückführung und Dampfventil (Detail M) sowie dem Detail X bezüglich Anordnung der Kondensatrückführung und weiteren Detaildarstellungen dieser.

Die in den Figuren dargestellte Sorptionskälteeinrichtung geht von einer Sandwichstruktur ihres Aufbaus aus.

Konkret befinden sich zwei benachbarte Adsorber-Desorber-Einheiten 1 innerhalb eines Innengehäuses. Das Innengehäuse besteht aus einem unteren als Trennfläche ausgebildeten Trennblech 2 sowie einem oberen Trennblech 3.

Zwischen den Adsorber-Desorber-Einheiten 1 ist eine Trennblechwand 4 ausgebildet.

Der Kondensator-Wärmetauscher 5 ist oberhalb der Adsorber-Desorber-Einheit 1 und der Verdampfer-Wärmetauscher 6 unterhalb der Einheit 1 befindlich.

Zwischen dem unteren Trennblech 2 und dem Verdampfer-Wärmetauscher 6 ist eine Wärmedämmplatte 7 befindlich, welche Öffnungen 8 besitzt, die im Wesentlichen kongruent zu Aussparungen im unteren Trennblech 2 sind, welche Dampfventile 9 aufnehmen.

Zwischen den jeweiligen Wärmetauschern und den Innengehäuseteilen sind Profilmaterial-Abstandshalter 10 vorgesehen, die zum einen eine definierte Lage der Baueinheiten der Sandwichstruktur gewährleisten und zum anderen stabilitätserhöhend wirken.

Ein Deckblech 11, als unteres Deckblech ausgeführt, umschließt den Verdampfer-Wärmetauscher 6 und stellt ein Element des Außengehäuses dar.

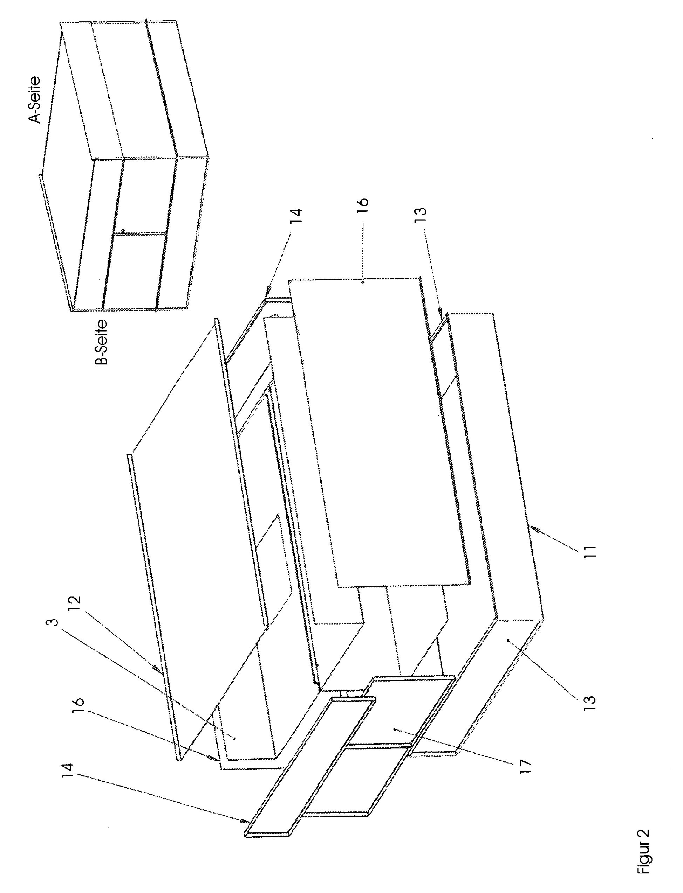

Ein oberes Deckblech 12 umschließt in analoger Weise den Kondensator-Wärmetauscher 5 und stellt ebenfalls ein Teil des Außengehäuse (siehe Fig. 2) dar.

Weitere Elemente des Außengehäuses sind Einschubbleche 13 auf beiden Seiten des Verdampfer-Wärmetauschers 6 sowie Einschubbleche 14 auf beiden Seiten des Kondensator-Wärmetauschers 5.

Das Innengehäuse zur Aufnahme der Adsorber-Desorber-Einheit 1 umfasst abgewinkelte Trennblechseiten 15, die von Seitenblechen 16 des Außengehäuses abgedeckt sind.

Weiterhin sind Einschubbleche 17 für die Adsorber-Desorber-Einheit 1 vorgesehen, die in diesem Fall ein Element des Außen- und Innengehäuses darstellen.

Die Stöße zwischen den einzelnen Blechen sind als Lippen-Naht ausgeführt und besitzen die notwendige Dichtigkeit und mechanische Stabilität.

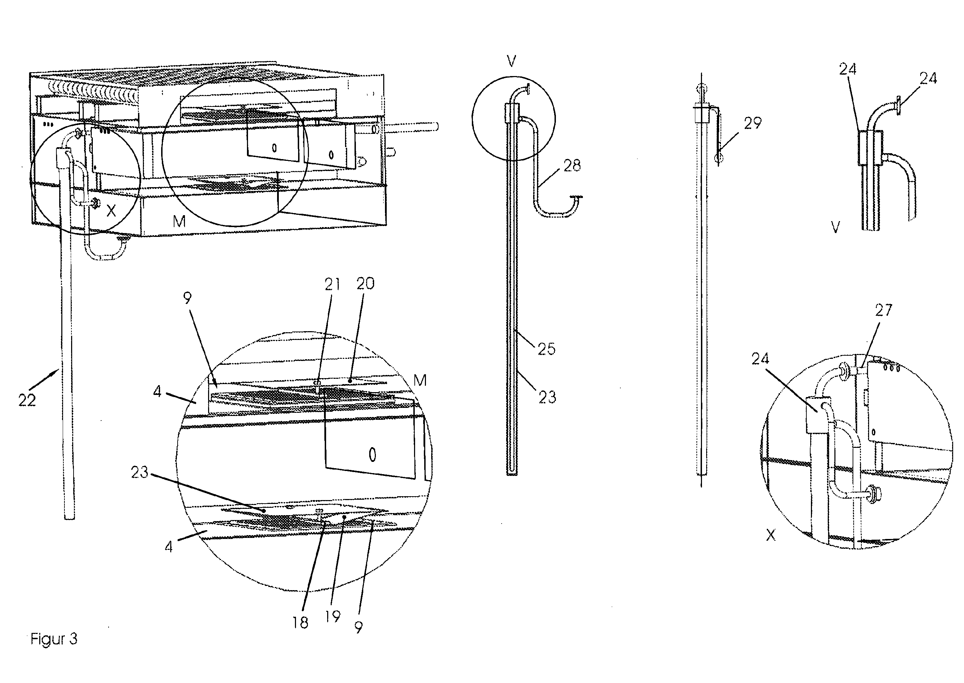

Die als Flatterventile ausgeführten Dampfventile 9 sollen unter Hinweise auf die Darstellung nach Fig. 3 links einschließlich Detail M näher erläutert werden.

In Aussparungen im unteren und oberen Trennblech 2; 4 ist ein Quersteg 18 vorhanden. Mit Hilfe des Querstegs 18 ist ein elastisches Flatterventilmaterial 19 fixiert.

Je nach Druckdifferenz unterhalb und oberhalb des jeweiligen Trennblechs 2; 4 ist entweder das Flatterventilmaterial an der Aussparung anliegend (Darstellung gemäß Fig. 3, Dampfventil 9 geschlossen) oder bei Druckdifferenz geöffnet (siehe Darstellung Fig. 3, Detail M unten).

Oberhalb der jeweiligen Aussparung ist ein Aussparungsabdeckstreifen 20 auf Abstand angeordnet.

Dieser jeweilige Aussparungsabdeckstreifen 20 schützt zum einen das Flatterventilmaterial 19 und bildet einen Höhenanschlag für das Flatterventilmaterial.

In einer Ausführungsform ist der jeweilige Aussparungsabdeckstreifen 20 mittels Distanzhalter durch Schrauben 21 am Quersteg 18 befestigt. Weiterhin ist gemäß der Darstellung nach Fig. 3 eine Siphon-Kondensatrückführung 22 außerhalb des geschlossenen Gehäuses der Sorptionskälteeinrichtung befindlich.

Diese Siphon-Kondensatrückführung 22 umfasst ein unten geschlossenes Mantelrohr 23.

Am oberen Ende des Mantelrohrs 23 ist ein Druckausgleichstopf 24 (siehe Detail V) vorhanden.

Dieser Druckausgleichstopf 24 nimmt ein Innenrohr 25 auf.

Das äußere freie Ende des Innenrohrs 25 ist über einen Flansch 26 mit dem Kondensatablaufstutzen 27 verbindbar.

Weiterhin sind rohrförmige Verbindungen 28 und 29 vorhanden, die einerseits (Verbindung 29) dem Druckausgleich hin zur geschlossenen Sorptionskälteeinrichtung und andererseits (28) der Verbindung hin zum Verdampfer-Wärmetauscher 6 dienen.

### Bezugszeichenliste

- 1: Adsorber-Desorber-Einheit
- 2: unteres Trennblech
- 3: oberes Trennblech
- 4: Trennblechwand
- 5: Kondensator-Wärmetauscher
- 6: Verdampfer-Wärmetauscher
- 7: Wärmedämmplatte
- 8: Öffnung
- 9: Dampfventil
- 10: Abstandshalter

- 11: unteres Deckblech
- 12: oberes Deckblech
- 13: Einschubblech Verdampfer
- 14: Einschubblech Kondensator
- 15: Trennblechseiten
- 16: Seitenblech
- 17: Einschubblech für Adsorber-Desorber-Einheit
- 18: Quersteg
- 19: Flatterventilmaterial
- 20: Abdeckstreifen
- 21: Schraube
- 22: Siphon-Kondensatrückführung
- 23: Mantelrohr
- 24: Druckausgleichstopf
- 25: Innenrohr
- 26: Flansch
- 27: Kondensatablaufstutzen
- 28; 29: rohrförmige Verbindung

## Patentansprüche

1. Kompakte Sorptionskälteeinrichtung, umfassend mindestens eine Adsorber-Desorber-Einheit (1) mit Wärmetauscher und Sorptionsmaterial, mindestens einen Kondensator-Wärmetauscher (5) und mindestens einen Verdampfer-Wärmetauscher (6), wobei diese Baueinheiten in einem gemeinsamen, vakuumdichten metallischen Außengehäuse befindlich sind, sowie mit Anschluss- und Verbindungselementen und Rohrdurchführungen zum hydraulischen Verschalten und Betrieb und einer Sandwichstruktur **dadurch gekennzeichnet, dass**
die mindestens eine Adsorber-Desorber-Einheit (1) sich in einem Innen- oder Teilinnengehäuse (2; 3) befindet,
der Kondensator-Wärmetauscher (5) und der Verdampfer-Wärmetauscher (6) beabstandet voneinander angeordnet sind und in ihrem Zwischenraum das Innengehäuse (2; 3) mit Adsorber-Desorber-Einheit (1) vorgesehen ist,
die zum Kondensator-Wärmetauscher (5) und zum Verdampfer-Wärmetauscher (6) gerichteten Trennflächen (2; 3) des Innengehäuses Dampfventile (9) aufweisen und im Bereich zwischen dem Innengehäuse (2; 3) und dem Verdampfer-Wärmetauscher (6) eine Wärmedämmschicht oder -platte (7) angeordnet ist, die Trennflächen (2; 4) des Innengehäuses Aussparungen aufweisen, wobei in den Aussparungen Flatterventile (19) als Dampfventile eingesetzt sind und die Flatterventile (19) im Öffnungszustand in Anschlag mit einem Aussparungsabdeckstreifen (20) gelangen, welcher höhenmäßig von der jeweiligen Trennfläche und der dort vorgesehenen Aussparung beabstandet ist.

2. Sorptionskälteeinrichtung nach Anspruch 1,
**dadurch gekennzeichnet, dass**
zwischen den jeweiligen Wärmetauschern und den Innengehäuseteilen Profilmaterial-Abstandshalter (10) vorgesehen sind.

3. Sorptionskälteeinrichtung nach Anspruch 2,
**dadurch gekennzeichnet, dass**
über die Abmessungen der Profilmaterial-Abstandshalter (10) die Position der Wärmetauscher zueinander festlegbar ist.

4. Sorptionskälteeinrichtung nach einem der vorangegangenen Ansprüche,
**dadurch gekennzeichnet, dass**
die Adsorber-Desorber-Einheit (1) mindestens zwei benachbarte Wärmetauscher mit Sorptionsmaterial aufweist, die sich in jeweils einer Kammer im Innengehäuse befinden.

5. Sorptionskälteeinrichtung nach Anspruch 1,
**dadurch gekennzeichnet, dass**
die jeweilige Aussparung rechteckförmig oder quadratisch ausgebildet ist und einen Längs- oder Quersteg (18) aufweist, welcher die Aussparung teilt, wobei das Flatterventilmaterial am jeweiligen Steg fixiert ist.

6. Sorptionskälteeinrichtung nach einem der vorangegangenen Ansprüche,
**dadurch gekennzeichnet, dass**
das Innengehäuse teilgeschlossen ausgeführt ist, wobei dessen vollständige Kapselung durch Abschnitte oder Teile des Außengehäuses realisiert ist.

7. Sorptionskälteeinrichtung nach einem oder mehreren der vorangegangenen Ansprüche,
**dadurch gekennzeichnet, dass**
zwischen dem Kondensator-Wärmetauscher (5) und dem Verdampfer-Wärmetauscher (6) eine Siphon-Kondensatrückführung (22) vorgesehen ist.

8. Sorptionskälteeinrichtung nach Anspruch 7,
**dadurch gekennzeichnet, dass**
die Siphon-Kondensatrückführung (22) ein Mantelrohr (23) aufweist, dessen eines Ende in einen Druckausgleichstopf (24) übergeht, wobei im Mantelrohr (23) ein Innenrohr (25) befindlich ist und das freie Ende des Innenrohrs (25) über einen Flansch (26) mit dem Kondensatablaufstutzen (27) des Kondensator-Wärmetauschers (5) in Verbindung steht, sowie weitere rohrförmige Verbindungen (28; 29) zwischen dem Druckausgleichstopf (24) und dem Innengehäuse sowie dem Verdampfer-Wärmetauscher (6) vorgesehen sind.

9. Sorptionskälteeinrichtung nach Anspruch 7 oder 8,
**dadurch gekennzeichnet, dass**
die Siphon-Kondensatrückführung (22) außerhalb der Sorptionskälteeinrichtung befindlich und über vakuumdichte Anschlussmittel mit den im Inneren der Kälteeinrichtung angeordneten jeweiligen Wärmetauschern verbunden ist.

## Claims

1. Compact sorption refrigeration device, comprising at least one adsorber/desorber unit (1) having a heat exchanger and sorption material, at least one condenser heat exchanger (5) and at least one evaporator heat exchanger (6), wherein these constructional units are located in a common, vacuum-tight metallic outer housing, and having connection and coupling elements and pipe ducts for the hydraulic interconnection and operation, and a sandwich structure,
**characterized in that**
the at least one adsorber/desorber unit (1) is located in an inner or partial inner housing (2; 3),
the condenser heat exchanger (5) and the evaporator heat exchanger (6) are spaced apart from each other and the inner housing (2; 3) with the absorber/desorber unit (1) is provided in the space between them, the separating surfaces (2; 3) of the inner housing, which are directed towards the condenser heat exchanger (5) and the evaporator heat exchanger (6), comprise steam valves (9), and in the region between the inner housing (2; 3) and the evaporator heat exchanger (6) a heat-insulating layer or board (7) is disposed, the separating surfaces (2; 4) of the inner housing are provided with recesses, with leaf valves (19) being inserted in the recesses as steam valves and, in the opened state, the leaf valves (19) hit against a recess cover strip (20) which is spaced apart with respect to height from the respective separating surface and the recess provided there.

2. Sorption refrigeration device according to claim 1,
**characterized in that**
profile material spacers (10) are provided between the respective heat exchangers and the inner housing parts.

3. Sorption refrigeration device according to claim 2,
**characterized in that**
the position of the heat exchangers relative to one another is definable by the dimensions of the profile material spacers (10).

4. Sorption refrigeration device according to one of the preceding claims,
**characterized in that**
the adsorber/desorber unit (1) comprises at least two adjacent heat exchangers having a sorption material, which are each located in a chamber in the inner housing.

5. Sorption refrigeration device according to claim 1,
**characterized in that**
the respective recess is rectangular or square and has a longitudinal or transverse web (18) dividing the recess, with the leaf valve material being fixed to the respective web.

6. Sorption refrigeration device according to one of the preceding claims,
**characterized in that**
the inner housing is partially closed, wherein its complete encapsulation is achieved with sections or parts of the outer housing.

7. Sorption refrigeration device according to one or more of the preceding claims,
**characterized in that**
a siphon condensate return system (22) is provided between the condenser heat exchanger (5) and the evaporator heat exchanger (6)

8. Sorption refrigeration device according to claim 7,
**characterized in that**
the siphon condensate return system (22) comprises a jacket pipe (23) whose one end extends into a pressure compensation pot (24), wherein within the jacket pipe (23) an inner pipe (25) is located whose free end communicates via a flange (26) with the condensate outlet nozzle (27) of the condenser heat exchanger (5), and that additional tubular connections (28; 29) are provided between the pressure compensation pot (24) and the inner housing as well as the evaporator heat exchanger (6).

9. Sorption refrigeration device according to claim 7 or 8,
**characterized in that**
the siphon condensate return system (22) is located outside the sorption refrigeration device and is connected by vacuum-tight connecting means to the respective heat exchangers disposed in the interior of the refrigeration device.

## Revendications

1. Installation frigorifique par sorption compacte, comprenant au moins une unité d'adsorption/désorption (1) avec échangeur de chaleur et matériau de sorption, au moins un échangeur de chaleur-condenseur (5) et au moins un échangeur de chaleur-évaporateur (6), dans laquelle ces unités structurelles se trouvent dans un boîtier extérieur métallique commun étanche au vide, et comprenant des éléments de raccordement et de liaison et des traversées de tubes pour le branchement hydraulique et le fonctionnement, et une structure en sandwich,
**caractérisée en ce que**
ladite au moins une unité d'adsorption/désorption (1) se trouve dans un boîtier intérieur ou un boîtier intérieur partiel (2 ; 3),
l'échangeur de chaleur-condenseur (5) et l'échangeur de chaleur-évaporateur (6) sont agencés écartés l'un de l'autre et le boîtier intérieur (2 ; 3) avec l'unité d'adsorption/désorption (1) est prévu dans leur espace intermédiaire,
les surfaces de séparation (2 ; 3) du boîtier intérieur, dirigées vers l'échangeur de chaleur-condenseur (5) et vers l'échangeur de chaleur-évaporateur (6) comprennent des soupapes à vapeur (9) et dans la région entre le boîtier intérieur (2 ; 3) et l'échangeur de chaleur-évaporateur (6) est agencée une couche ou une plaque d'isolation thermique (7), les surfaces de séparation (2 ; 4) du boîtier intérieur comporte des échancrures, des soupapes à languette (19) sont mises en place à titre de soupapes à vapeur dans les échancrures, et les soupapes à languette (19) parviennent, dans l'état ouvert, en butée avec un ruban de recouvrement d'échancrure (20), lequel est écarté, en termes de hauteur, de la surface de séparation respective et de l'échancrure prévue à cet endroit.

2. Installation frigorifique par sorption selon la revendication 1, **caractérisée en ce que** des éléments d'écartement (10) en matériau profilé sont prévus entre les échangeurs de chaleur respectifs et les parties de boîtier intérieures.

3. Installation frigorifique par sorption selon la revendication 2, **caractérisée en ce que** la position des échangeurs de chaleur l'un par rapport à l'autre peut être fixée via les dimensions des éléments d'écartement (10) en matériau profilé.

4. Installation frigorifique par sorption selon l'une des revendications précédentes,
**caractérisée en ce que** l'unité d'adsorption/désorption (1) comprend au moins deux échangeurs de chaleur voisins avec un matériau de sorption, qui se trouvent chacun dans une chambre dans le boîtier intérieur.

5. Installation frigorifique par sorption selon la revendication 1,
**caractérisée en ce que** l'échancrure respective est réalisée rectangulaire ou carrée, et présente une barrette longitudinale ou transversale (18) qui divise l'échancrure, le matériau de la soupape à languette étant fixé sur la barrette respective.

6. Installation frigorifique par sorption selon l'une des revendications précédentes,
**caractérisée en ce que** le boîtier intérieur est réalisé partiellement fermé, et son encapsulation complète est réalisée par des tronçons ou des parties du boîtier extérieur.

7. Installation frigorifique par sorption selon l'une ou plusieurs des revendications précédentes,
**caractérisée en ce qu'**un recyclage de condensat à siphon (22) est prévu entre l'échangeur de chaleur-condenseur (5) et l'échangeur de chaleur-évaporateur (6).

8. Installation frigorifique par sorption selon la revendication 7,
**caractérisée en ce que** le recyclage de condensat à siphon (22) comprend un tube enveloppe (23) dont l'une des extrémités se transforme en un pot de compensation de pression, dans laquelle un tube intérieur (25) se trouve dans le tube enveloppe (23) et l'extrémité libre du tube intérieur (25) est en liaison, via une bride (26), avec la pipe de sortie de condensat (27) de l'échangeur de chaleur-condenseur (5), et dans laquelle il est prévu d'autres liaisons tubulaires (28 ; 29) entre le pot de compensation de pression (24) et le boîtier intérieur ainsi que l'échangeur de chaleur-évaporateur (6).

9. Installation frigorifique par sorption selon la revendication 7 ou 8, **caractérisée en ce que** le recyclage de condensat à siphon (22) se trouve à l'extérieur de l'installation frigorifique par sorption et est reliée, via des organes de raccordement étanches au vide, avec les échangeurs de chaleurs respectifs agencés à l'intérieur de l'installation frigorifique.
